(19) Europäisches Patentamt
European Patent Office
Office européen des brevets

(11) **EP 2 620 472 B1**

(12) **EUROPEAN PATENT SPECIFICATION**

(45) Date of publication and mention of the grant of the patent:
**30.05.2018 Bulletin 2018/22**

(51) Int Cl.:
***C08L 23/06*** *(2006.01)* ***C08L 23/08*** *(2006.01)*

(21) Application number: **12000433.8**

(22) Date of filing: **24.01.2012**

# (54) POYETHYLENE COMPOSITION WITH IMPROVED LOW TEMPERATURE PERSSURE RESISTANCE

POLYETHYLEN-ZUSAMMENSETZUNG MIT VERBESSERTEM NIEDERTEMPERATUR-DRUCKWIDERSTAND

COMPOSITION DE POLYÉTHYLÈNE DOTÉE D'UNE RÉSISTANCE AMÉLIORÉE À LA PRESSION À BASSE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2013 Bulletin 2013/31**

(73) Proprietor: **Borealis AG**
**1220 Vienna (AT)**

(72) Inventors:
- **Piel, Tanja**
**4030 Linz (AT)**
- **Buryak, Andrey**
**4021 Linz (AT)**

(74) Representative: **Kador, Utz Ulrich**
**Kador & Partner**
**Corneliusstrasse 15**
**80469 München (DE)**

(56) References cited:
**EP-A1- 1 460 105**
**WO-A1-2005/092974**
**US-A1- 2007 282 067**
**US-B1- 6 185 349**
**US-B1- 6 770 341**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 620 472 B1

## Description

Nowadays, pipes of polymer material are frequently used for various purposes, such as fluid transport, i.e. transport of liquid or gas, e.g. water or natural gas, during which the fluid can be pressurised. Moreover, the transported fluid may have varying temperatures, usually within the temperature range from about 0 °C. to about 50 °C. Such pressure pipes are preferably made of polyolefin plastic, such as medium density polyethylene (MDPE; density: 0.930-0.942 g/cm$^3$) and high density polyethylene (HDPE; density: 0.945-0.965 g/cm$^3$). By the expression "pressure pipe" herein is meant a pipe which, when used, is subjected to a positive pressure, i.e. the pressure inside the pipe is higher than the pressure outside the pipe.

Polymer pipes are generally manufactured by extrusion, or by injection moulding. The properties of such conventional polymer pipes produced by extrusion or injection moulding are sufficient for many purposes, although enhanced properties may be desired, for instance in applications requiring high pressure resistance, i.e. pipes that are subjected to an internal fluid pressure for a long and/or short period of time. A common standard for expressing pressure resistance of PE 100 pipes according to the design stress rating, is measured according to ISO 9080:2003. The suitability for use of a plastics pressure pipe is first of all determined by the performance under stress of its material of construction, taking into account the envisaged service conditions (e.g. temperature). It is conventional to express this by means of the hydrostatic (hoop) stress which a plastics pipe made of the material under consideration is expected to be able to withstand for 50 years at an ambient temperature of 20 °C using water as the internal test medium. The outside environment can be water or air. The standard provides a definitive procedure incorporating an extrapolation using test data at different temperatures analysed by multiple linear regression analysis. The results permit the determination of material-specific design values in accordance with the procedures described in the relevant system standards. This multiple linear regression analysis is based on the rate processes most accurately described by $\log_{10}$(stress) versus $\log_{10}$(time) models.

The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415).

WO 00/22040 discloses a pipe having good mechanical properties made from a bimodal resin.

Advanced pipe material should nowadays even conform with pressure resistance levels higher than PE100. Thus, pressure pipes should meet the requirements of PE112 or even PE125 (MRS of over 11.2 MPa or 12.5 MPa for a lifetime of minimum 50 years at 20 °C).

One attempt to meet these requirements has been the increase of the density of the polyolefin composition used for such pressure pipes. However, by increasing the density slow crack growth resistance (SCGR) is reduced which will result in earlier brittle failure and thus has a negative impact on the MRS rating as well.

WO 01/02480 A1 discloses a polyethylene molding material having a bimodal molecular weight distribution and a pressure pipe produced from this molding material with increased strength, compared with the known pipe material meeting the level of PE 100 in accordance with ISO/DIS 9080:. The disclosed polyethylene molding material has a density at a temperature of 23 °C. in the range at least 948 kg/m$^3$ as a natural product, i.e. without addition of dye, and at least 959 kg/m$^3$ as a black-colored product having a carbon black content in the range from 2 to 5% by weight, based on the total weight of the black-colored product, and has a broad bimodal molecular weight distribution, in which the ratio of the weight of the low-molecular-weight fraction to the weight of the relatively high-molecular-weight fraction is in the range from 0.5 to 2.0, preferably from 0.8 to 1.8.

EP 1 460 105 A1 discloses a multimodal polyethylene composition and to pressure pipes made therefrom. The multimodal polyethylene composition comprises a low molecular weight ethylene homo-polymer fraction and a high molecular weight ethylene copolymer fraction, wherein the low molecular weight fraction is present in an amount of 45 to 55 % by weight; the high molecular weight fraction is present in an amount of 45 to 55 % by weight; the polymer has a $MFR_5$ of greater than 0.10 g/10 min; and the polymer has a density of greater than or equal to 952 kg/m$^3$. A pipe made from such a material meets the PE125 pressure resistance standard and has a low tendency of sagging.

Various modern techniques (pipe bursting, directional drilling, relining,etc.) have been developed combining faster and cheaper installation. These techniques may however be more aggressive and demanding to pipe materials, which can be in contact with hard or sharp objects. Therefore, impact properties such as rapid crack propagation resistance (RCPR) and slow crack growth resistance (SCGR) are required as well. Further properties which are desirable to improve or to maintain at a high level are processability, tensile modulus, short term pressure resistance and impact properties of a pipe material.

Therefore, it is the object underlying the present invention to provide a polyolefin composition with improved pressure resistance, especially low temperature short term pressure resistance as well as impact properties, while properties such as slow crack growth resistance, processability, and tensile modulus are maintained at a high level.

It is the finding of the present invention according to claims 1 to 7 that the above objects can be achieved by providing a polyethylene composition comprising a base resin which comprises

(A) a first ethylene homo- or copolymer fraction, and
(B) a second ethylene homo- or copolymer fraction,

fraction (A) having a lower molecular weight than fraction (B),
wherein the polyethylene composition has a $MFR_5$ of not more than 0.2 g/10 min, determined according to ISO 1133 at 190 °C and at a load of 5.0 kg;
a $MFR_{21}$ of not more than 5.0 g/10 min, determined according to ISO 1133 at 190 °C and at a load of 21.6 kg, and the relationship between pressure resistance (STPR) according to ISO 1167-1:2006, measured at 12.4 MPa and 20 °C in hours and tensile modulus (TM), measured according to ISO 527-2:1993 in MPa fulfils the following inequation: log (STPR) [h] > (-4.5936 + 0.00624 * TM [MPa]) + 0.35, wherein the polyethylene composition has a short term pressure resistance (STPR) measured according to ISO 1167-1:2006 at 20 °C and 12.4 MPa of at least 1000 h.

Such a polyethylene composition is obtainable by a process according to claims 8 to 11 comprising the steps of:

i) polymerising in a first polymerization step ethylene monomers, and optionally one or more alpha-olefin comonomers, in the presence of a polymerisation catalyst to obtain a first ethylene homo- or copolymer fraction (A)
ii) polymerising in a second polymerization step ethylene monomers, and optionally one or more alpha-olefin comonomers, in the presence of a polymerisation catalyst to obtain a second ethylene homo- or copolymer fraction (B) having a higher average molecular weight than fraction (A),

wherein the first polymerisation step (i) and the second polymerisation step (ii) are conducted in any order.

The above objects can further be achieved by the use of the above polyethylene composition for the production of a pipe or a fitting.

The polyethylene composition of the present invention is characterized by a substantially improved low temperature short term pressure resistance measured according to ISO 1167-1:2006 at 20 °C and at a stress level of 12.4 MPa.

According to preferred embodiments of the present invention the polyethylene composition has a short term pressure resistance (STPR) measured according to ISO 1167-1:2006 at the above conditions of at least 1000 h, preferably even at least 2000 h.

At comparative tensile modulus values, the compositions according to the present invention exhibit substantially higher pressure resistance values (according to ISO 1167-1:2006 at the above conditions). Thus an improved ratio between pressure resistance and rigidity/ductility can be achieved by the compositions of the present invention.

At the same time the polyethylene compositions of the present invention exhibit excellent rapid crack propagation resistance expressed by the critical temperature $T_{crit}$ in the S4 test according to ISO 13477:2008 of at least -20 °C, preferably at least -22 °C, even more preferably at least -25 °C.

The compositions exhibit a design stress rating according to ISO 9080:2003 of MRS 8.0 (withstanding an internal stress of 8.0 MPa for 50 years at 20 °C), preferably MRS10.0 (withstanding an internal stress of 10.0 MPa for 50 years at 20 °C) or even higher.

The compositions of the present invention further exhibit excellent impact properties. Thus, the Charpy notched impact strength according to ISO 179/1eA measured at 0 °C is preferably at least 24 kJ/m$^2$, more preferably at least 25 kJ/m$^2$ and even more preferably at least 30 kJ/m$^2$. The Charpy notched impact strength according to ISO 179/1eA measured at -20 °C is preferably at least 18 kJ/m$^2$, more preferably at least 20 kJ/m$^2$.

The compositions of the present invention further exhibit a slow crack growth resistance, determined according to the PENT testing procedure at 2.8 MPa and 80 °C of preferably at least 30 h, more preferably at least 40 h, even more preferably at least 50 h,. According to other embodiments, the inventive compositions exhibit a slow crack growth resistance determined according to PENT measured at the same conditions of preferably at least 100 h, more preferably at least 500 h, even more preferably at least 1000 h.

The melt flow rate (MFR) is another important property of the multimodal polyethylene for pipes according to the invention. The MFR is determined according to ISO 1133 and is indicated in g/10 min. The MFR is an indication of the flowability, and hence the processability, of the polymer. The higher the melt flow rate, the lower the viscosity of the polymer. The MFR is determined at different loadings such as 2.16 kg ($MFR_2$; ISO 1133, condition D), 5 kg ($MFR_5$; ISO 1133, condition T) or 21.6 kg ($MFR_{21}$; ISO 1133, condition G).

According to the present invention it has now been surprisingly found that a superior performance of low temperature short term pressure resistance, slow crack growth resistance, rapid crack propagation resistance and impact strength can be achieved, if the melt flow rate of the polyethylene composition is reduced to certain limits and the ratio between STPR and tensile modulus is controlled in the manner as defined above.

If a polyethylene composition fulfils the above defined relation between STPR and tensile modulus, this behavior characterizes an improved pressure resistance at a comparable stiffness or comparable density vis-à-vis a conventional polyethylene composition. In turn this means that a density increase (increase in tensile modulus) is not necessary according to the present invention in order to achieve an improved short term pressure resistance of a polyethylene composition.

Especially, the $MFR_5$ of the polyethylene composition according to the present invention is not more than 0.2 g/10 min, preferably not more than 0.18 g/10 min. The $MFR_5$ of the polyethylene composition according to the present invention may be preferably not more than 0.15 g/10 min, even more preferably not more than 0.10 g/10 min.

The object of the invention can also be achieved by adjusting the $MFR_{21}$ of the polyethylene composition to decreased ranges. Especially, the $MFR_{21}$ of the polyethylene composition according to the present invention is not more than 5.0 g/10 min, preferably not more than 4.0 g/10 min, even more preferably not more than 3.0 g/10 min.

The polymer fraction (A) preferably is an ethylene homopolymer. The polymer fraction (A) preferably has a density of 960 to 980 kg/$m^3$.

The present invention is further characterized by an increased flow rate ratio (FRR), i.e. the ration between $MFR_{21}$ and $MFR_5$, measured according to ISO 1133. Thus the FRR of the inventive compositions is preferably at least 24, more preferably at least 25 and even more preferably at least 30.

It is preferred that polymer fraction (B) which constitutes the HMW component of the polyethylene composition is a copolymer of ethylene and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene and 1-octene. Thereby, 1-butene and 1-hexene are especially preferred.

The density of the multimodal polyethylene may lie in the medium to high density range, more particularly in the range 930-970 kg/$m^3$, even more particularly not less than 943 kg/$m^3$. Preferably, densities of 943-965 kg/$m^3$ are used. It is possible to obtain pressure pipes of a higher design stress rating with high density multimodal polyethylene than with medium density multimodal polyethylene.

The polyethylene composition preferably comprises at least 0.1 mol%, more preferably at least 0.2 mol% of at least one alpha-olefin comonomer. The amount of comonomer is preferably at most 3.0 mol%, more preferably at most 2.0 mol%, and still more preferably at most 1.0 mol%.

In addition to the base resin, usual additives for utilization with polyolefins, such as pigments, stabilizers (antioxidant agents), antacids and/or anti-UVs, antistatic agents and utilization agents (such as processing aid agents) may be present in the polyethylene composition preferably, the amount of these additives is 10 wt% or below, further preferred 8 wt% or below, still more preferred 4 wt% or below of the total composition. The composition may comprise carbon black in an amount of 8 wt% or below, further preferred of 1 to 4 wt%, of the total composition.

It should be noted that the multimodal polymer composition of the present invention is characterised, not by any single one of the above defined features, but by the combination of all the features defined in claim 1. By this unique combination of features it is possible to obtain pressure pipes of superior performance, particularly with regard to pressure resistance according to ISO 1167-1:2006, rapid crack propagation resistance, design stress rating, impact strength, and processability.

The polyethylene composition of the present invention is specifically designed for the manufacture of pressure pipes. For this purpose the composition may preferably be a multimodal polyethylene, more preferably a bimodal polyethylene. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The multimodal polyethylene may comprise a low molecular weight (LMW) ethylene homopolymer fraction and a high molecular weight (HMW) ethylene copolymer fraction. Depending on whether the multimodal polyethylene is bimodal or has a higher modality the LMW and HMW fractions may comprise only one fraction each or include sub-fractions, i.e. the LMW may comprise two or more LMW sub-fractions and similarly the HMW fraction may comprise two or more HMW sub-fractions. According to preferred embodiments, the LMW fraction is an ethylene homopolymer and the HMW fraction is an ethylene copolymer, i.e. it is only the HMW fraction that includes a comonomer. Preferably, the HMW fraction is a copolymer of ethylene with at least one further alpha-olefin comonomer selected from 1-propene, 1-butene, 1-pentene, 1-hexene and 1-octene. As a matter of definition, the expression "ethylene homopolymer" used herein relates to an ethylene polymer that consists substantially, i.e. to at least 97% by weight, preferably at least 99% by weight, more preferably at least 99.5% by weight, and most preferably at least 99.8% by weight of ethylene and thus is an HD ethylene polymer which preferably only includes ethylene monomer units. Moreover, the lower limit of the molecular weight range of the HMW fraction is 3 500, preferably 4000. This means that almost all ethylene copolymer molecules in the multimodal polyethylene pipe composition of the invention have a molecular weight of at least 3500, preferably at least 4000. The reason for this is that the presence of comonomer in the LMW fraction gives a pressure pipe with poor strength.

In the present invention the proportions of the LMW and HMW fractions (also known as the "split" between the fractions) are selected properly. More particularly, the weight ratio of the LMW fraction to the HMW fraction should preferably lie in the range (35-55):(65-45), more preferably (43-51):(57-49), most preferably (43-48):(57-52). If the split lies within these ranges, the proportion of the HMW fraction results in high strength values and a low amount of gels.

The molecular weight distribution, as defined by the ratio of the weight average molecular weight (Mw) to the number average molecular weight (Mn), i.e. Mw/Mn, of the multimodal polyethylene may range from rather narrow to rather broad values and preferably lies in the range of from 3 to 40, preferably from 15 to 40. The reason for this is to obtain a pressure pipe with a desired combination of good processability and good strength. Further, the number average molecular weight, Mn, lies in the range of from 7000 to 16000, preferably from 8000 to 15000, while the weight average molecular weight, Mw lies in the range of from 180000 to 350000 , preferably of from 220000 to 330000.

The polyethylene compositions of the present invention are usually made by a multi-stage process, i.e. a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homo-polymerization or copolymerization reactions, e.g. gas phase, slurry phase, liquid phase polymerizations, using conventional reactors, e.g. loop reactors, gas phase reactors, batch reactors, etc

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

Multimodal polyethylene compositions of the present invention are preferably produced in a multistage process, where lower molecular weight and higher molecular weight polymers (components) are produced in different polymerization steps, in any order.

A relatively low density (or HMW fraction) copolymer can be prepared in the first polymerization step and the relatively high density (or LMW fraction) polymer in the second polymerization step. This can be referred to as the reverse mode. Alternatively, the low molecular weight polymer can be prepared in the first polymerization step and the high molecular weight copolymer in the second polymerization step. This can be referred to as the normal mode and is preferred.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise gas phase polymerization steps.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

The slurry and gas phase processes are well known and described in the prior art.

In the present invention, the polymerisation to obtain fraction (A) is preferably carried out in a slurry reactor and/or the polymerisation to obtain fraction (B) is preferably carried out in a gas phase reactor.

In a preferred embodiment of the invention the LMW fraction is produced first and the HMW fraction is produced in the presence of LMW fraction. In this case the LMW fraction is the first polyethylene fraction (A) and the HMW fraction is the second polyethylene fraction (B).

The polymerisation catalysts for the production of the base resin may include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the reactors, the different molecular-weight-distribution curves of these polymers together forming a molecular-weight-distribution curve having a broad maximum or several maxima, i.e. the end product is a multimodal polymer mixture.

It is preferred that the multimodal polyethylene composition according to the invention is a bimodal polyethylene mixture consisting of polymer fractions (A) and (B), optionally further comprising a small prepolymerisation fraction. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C. The pressure in the loop reactor is typically from 1 to 150 bar, preferably from 1 to 100 bar and the pressure in the gas phase reactor is typically at least 10 bar, preferably at least 15 bar but typically not more than 30 bar, preferably not more than 25 bar.

The polymerisation in the slurry phase reactor usually takes place in an inert diluent, typically a hydrocarbon diluent which is selected from a group comprising $C_3$ to $C_8$ hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole.

In a preferred embodiment of a gas phase reactor, the polymerization takes place in a fluidised bed gas phase reactor where an olefin is polymerised in the presence of a polymerisation catalyst in an upwards moving gas stream. The reactor typically contains a fluidised bed comprising the growing polymer particles containing the active catalyst located above a fluidisation grid. The polymer bed is fluidised with the help of a fluidisation gas comprising the olefin monomer, eventually comonomer(s), eventually chain growth controllers or chain transfer agents, such as hydrogen, and eventually inert gas.

Also antistatic agent(s) may be introduced into the gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The polymerization process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C and more preferably from 40 °C to 70 °C.

The pressure is not critical and is typically from 1 bar to 150 bar, preferably from 10 bar to 100 bar.

A chain-transfer agent, preferably hydrogen, is added as required to the reactors, and preferably 200 to 800 moles of $H_2$/kmoles of ethylene are added to the reactor, when the LMW fraction is produced in this reactor, and 0 to 50 moles of $H_2$/kmoles of ethylene are added to the gas phase reactor when this reactor is producing the HMW fraction.

The term "base resin" means the entirety of polymeric components in the polyethylene composition according to the invention, usually making up at least 90 wt% of the total composition. Preferably, the base resin is consisting of polymer fractions (A) and (B), optionally further comprising a prepolymer fraction in an amount of up to 20 wt%, more preferably up to 10 wt%, and most preferably up to 5 wt% of the total base resin.

Optionally, additives or other polymer components can be added to the composition during the compounding step in the amount as described above. Preferably, the composition of the invention obtained from the reactor is compounded in the extruder together with additives in a manner known in the art.

The composition of the invention, preferably if produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 100 kg/h to 500 kg/h, more preferably 150 kg/h to 300 kg/h.

The screw speed of the extruder is preferably 200 rpm to 500 rpm, more preferably 300 rpm to 450 rpm.

Preferably, in said extrusion step the SEI (specific energy input) of the extruder may be 100 kWh/ton to 400 kWh/ton, more preferably 200 kWh/ton to 300 kWh/ton.

The melt temperature in said extrusion step is preferably 200°C to 300°C, more preferably 230°C to 270°C.

In certain embodiments of the invention the above extrusion condition may also deviate from the above ranges.

Furthermore, the present invention relates to an article, preferably a pipe or a fitting, comprising the polyethylene composition of the invention or obtainable by a multi-stage process as described above, and to the use of such a polyethylene composition for the production of an article, preferably a pipe or a fitting and to the use of such a polyethylene composition for increasing the lifetime of a pipe or a fitting.

## Examples

### 1. Definitions and measurement methods

#### a) Density

Density of the polymer was measured according to ISO 1183-1:2004 (method A) on compression moulded specimen prepared according to EN ISO 1872-2(Feb 2007) and is given in kg/$m^3$.

#### b) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

#### c) Comonomer content

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta$+) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201) and all contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 34.23 ppm assigned to the $\alpha$B2 sites accounting for the number of reporting sites per comonomer:

$$B = (1/2)*I_{\alpha B2}$$

With no other signals indicative of other comonomer sequences, i.e. consecutive comonomer incorporation observed, the total 1-butene comonomer content was calculated based solely on the amount of isolated 1-butene sequences:

$$B_{total} = B$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2S} + I_{3S} )$$

Characteristic signals resulting from unsaturated vinyl end-groups were also observed. The content of such unsaturated end-groups was quantified using the integral of the signals at 33.93 ppm assigned to the $\alpha$U sites:

$$U = I_{\alpha U}$$

The relative content of ethylene was quantified using the integral of the bulk methylene ($\delta$+) signals at 30.00 ppm

$$E = (1/2)*I_{\delta +}$$

The total ethylene comonomer content was calculated based the bulk methylene signals and accounting for ethylene units present in other observed comonomer sequences or end-groups:

$$E_{total} = E + (5/2)*B + (3/2)*S + (3/2)*U$$

The total mole fraction of 1-butene in the polymer was then calculated as:

$$fB = ( B_{total} / ( E_{total} + B_{total} )$$

The total comonomer incorporation of 1-butene in mole percent was calculated from the mole fraction in the usual manner:

$$B\ [\text{mol\%}] = 100 * fB$$

The total comonomer incorporation of 1-butene in weight percent was calculated from the mole fraction in the standard manner:

$$B\ [\text{wt\%}] = 100 * (fB * 56.11) / ((fB * 56.11) + ((1-fB) * 28.05))$$

**d) Determination of the average molecular weight (Mn, Mw) and the molecular weight distribution (MWD)**

The average molecular weight (Mw, Mn), the molecular weight distribution (MWD) and its broadness, described by the polydispersity index, PDI = Mw/Mn (wherein Mn is the number average molecular weight and Mw is the weight average molecular weight) were determined by Gel Permeation Chromatography (GPC) according to ISO 16014-4:2003 and ASTM D 6474:1999. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-di tert butyl-4-methyl-phenol) as solvent at 160 °C and at a constant flow rate of 1 ml/min. 200 μl of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 ml (at 160 °C) of stabilized TCB (same as in the mobile phase) for 2.5 hours for PP or 3 hours for PE at 160°C under continuous gentle shaking in the autosampler of the GPC instrument.

As it is known in the art, the weight average molecular weight of a blend can be calculated if the molecular weights of its components are known according to:

$$Mw_b = \sum_i w_i \cdot Mw_i$$

where $Mw_b$ is the weight average molecular weight of the blend, $w_i$ is the weight fraction of component "i" in the blend and $Mw_i$ is the weight average molecular weight of the component "i".

The number average molecular weight can be calculated using the mixing rule:

$$\frac{1}{Mn_b} = \sum_i \frac{w_i}{Mn_i}$$

where $Mn_b$ is the weight average molecular weight of the blend, $w_i$ is the weight fraction of component "i" in the blend and $Mn_i$ is the weight average molecular weight of the component "i".

**e) Rapid crack propagation**

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurised internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/-1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test where the crack propagation exceeds 4.7 times the pipe diameter. The critical temperature ($T_{crit}$) i.e. the ductile brittle transition temperature as measured according to ISO 13477:2008 is the lowest temperature at which the pipe passes the test. The lower the critical temperature the better, since it results in an extension of the applicability of the pipe.

f) **Short term Pressure resistance**

The pressure test on un-notched 32 mm SDR 11 pipes having a length of 450 mm is carried out in water-inside and water-outside environment according to ISO 1167-1:2006. End caps type A were used. The time to failure is determined in hours. A hoop stress of 12.4 MPa and a temperature of 20 °C was applied.

**g) Slow crack growth resistance**

The slow crack propagation resistance is determined according to the PENT test procedure (ASTM F 1473-01) at a stress of 2.8 MPa at 80 °C. From a compression moulded plate with a thickness of 10mm using the conditions defined in chapter 3.3 of EN ISO 1872-2 (Feb 2007) a rectangular specimen 60x25mm with a thickness of 10mm is machined out. This rectangular specimen is notched according the procedure described in ASTM F1473-01. One end of the rectangular specimen is fixed in position while a load (dead weight) is hung from the other end. The primary purpose of the notch is to introduce a triaxial stress state at the notch tip to ensure a brittle slow crack growth fracture mode. The outcome of this test is the time to failure or the time it takes for the two halves of the specimen to fully separate or reach a separation of 0.5 inches, whichever comes first.

**h) Charpy impact strength**

Charpy impact strength was determined according to ISO179/1eA:2000 on V-notched samples of 80*10*4 mm at 0 °C (Charpy impact strength (0 °C)) and -20 °C (Charpy impact strength (-20 °C)). Samples were milled from plaques of 4 mm thickness prepared by compression molding according to ISO 293:2004 using the conditions defined in chapter 3.3 of ISO 1872-2:2007.

**i) Tensile modulus**

As a measure for stiffness, the tensile modulus (E-modulus) of the compositions was measured at 23 °C on compression molded specimens according to ISO 527-2:1993. The specimens (1B type) were milled from plaques of 4 mm thickness prepared by compression molding according to ISO 293:2004 using the conditions defined in chapter 3.3 of ISO 1872-2:2007. The modulus was measured at a speed of 1 mm/min.

**k) Rheological parameter Eta 747** ($\eta_{747}$)

The creep test was performed on an Anton Paar MCR 501 stress controlled rotational rheometer, using a parallel plate geometry of 25 mm and setting a gap of 1.8 mm. Sample preparation was done by compression moulding at 200°C. The melting and pressure loading process used on the compression moulding, were done for a total time of 5 minutes. The creep test was done at 190°C, by the application of a constant shear stress, $\tau$ of 747 Pa. At the start of the measurement a normal force of less than 3.5 N was set. The resulting response was monitored in terms of both deformation, $\gamma$ and shear viscosity, $\eta$, over a total creep time of 1860 s. The so-called ETA747 ($\eta_{747}$) is the shear viscosity determined at a shear stress of 747 Pa and for a creep time of 1740 s.

The appropriate applied creep stress was previously determined by means of an oscillatory shear measurement, in order to ensure a creep response within the linear viscoelastic region.

**l) Intrinsic viscosity (IV) measurement**

The reduced viscosity (also known as viscosity number), $\eta_{red}$, and intrinsic viscosity, $[\eta]$, of polyethylenes and polypropylenes are determined according to the ISO 1628-3: "Determination of the viscosity of polymers in dilute solution using capillary viscometers".

Relative viscosities of a diluted polymer solution (~1mg/ml) and of a pure solvent (decahydronaphthalene) are determined in an automated capillary viscometer (Lauda PVS1) equipped with 4 Ubbelohde capillaries placed in a thermostatic bath filled with silicone oil. The bath temperature is maintained at 135 °C. Each measuring stand is equipped with electronics to control pump, valve function, time measurement, meniscus detection and has a magnetic stirrer. The sample is weighed out and directly placed into the capillary. The capillary is filled with the exact volume of solvent by use of an automatic pipette. The sample is dissolved with constant stirring until complete dissolution is achieved (typically within 60-90min).

The efflux time of the polymer solution as well as of the pure solvent are measured several times until three consecutive readings do not differ for more than 0.1s (standard deviation).

The relative viscosity of the polymer solution is determined as the ratio of averaged efflux times in seconds obtained for both, polymer solution and solvent:

$$\eta_{rel} = \frac{t_{solution} - t_{solvent}}{t_{solvent}} \quad \text{[dimensionless]}$$

Reduced viscosity ($\eta_{red}$) is calculated using the equation:

$$\eta_{red} = \frac{t_{solution} - t_{solvent}}{t_{solvent} * C} \quad \text{[dl/g]}$$

where C is the polymer solution concentration at 135°C: $C = \frac{m}{V\gamma}$, and m is the polymer mass, V is the solvent volume, and $\gamma$ is the ratio of solvent densities at 20°C and 135°C ($\gamma=\rho_{20}/\rho_{135}=1.107$).

The calculation of intrinsic viscosity $[\eta]$ is performed by using the Schulz-Blaschke equation from the single concentration measurement:

$$[\eta] = \frac{\eta_{red}}{1 + K + C + \eta_{red}}$$

where K is a coefficient depending on the polymer structure and concentration. For calculation of the approximate value for $[\eta]$, K=0.27.

**2. Production of polymer compositions and pipes**

A base resin was produced in a multistage reaction comprising a first (pre)polymerisation stage in slurry in a 50 $dm^3$ loop reactor and in the presence of a polymerisation catalyst supplied by BASF under the trade name Lynx 200™ which is a magnesium dichloride based titanium chloride catalyst. Triethylaluminum was used as a cocatalyst followed by a flashing step after the slurry reactor and transferring the slurry to a 500 $dm^3$ loop reactor wherein polymerisation was continued in slurry to produce the low molecular weight component, and a second polymerisation in a gas phase reactor in the presence of the product from the second loop reactor to produce the comonomer containing high molecular weight component. As comonomer, 1-butene has been used.

The resulting polymer was purged with nitrogen (about 50 kg/h) for one hour, stabilised with 2200 ppm of Irganox B225 and 1500 ppm Ca-stearate and then extruded to pellets in a counter-rotating twin screw extruder CIM90P (manufactured by Japan Steel Works) while carbon black was added in a masterbatch composition (final concentration in the polymer composition: 2.3 wt.%) so that the throughput was 232 kg/h and the screw speed was 400 rpm.

The applied polymerisation and extrusion conditions and the final properties of the extruded compositions in pellet form are listed in Table 1. Selected properties of further comparative examples CE 3 to CE 11 together with the CE 1 and CE 2 are shown in Table 2. Selected properties of the prepared polymer compositions according to inventive examples 1 and 2 (Ex. 1, Ex. 2) as well as comparative examples CE1 and CE2 are given in Table 3 and 4.

In Table 5 parameters and results of the relationship according to claim 1 for the prepared inventive compositions 1 and 2 (Ex. 1, Ex. 2) and the comparative compositions CE 1 to CE 11 are shown.

**Table 1**

| Example | Ex. 1 | CE 1 | Ex. 2 | CE 2 |
|---|---|---|---|---|
| **PREPOLYMERISATION** °C | | | | |
| temperature | 60 | 60 | 60 | 60 |

(continued)

| Example | | Ex. 1 | CE 1 | Ex. 2 | CE 2 |
|---|---|---|---|---|---|
| **PREPOLYMERISATION** °C | | | | | |
| pressure | bar | 61 | 58 | 58 | 60 |
| catalyst feed | g/h | 4.2 | 3.3 | 4.3 | 4.7 |
| cocatalyst feed | g/h | 4.5 | 3.7 | 4.3 | 5.1 |
| antistatic feed | ppm | 10 | 10 | 10 | 10 |
| $C_2$ feed | kg/h | 2 | 2 | 2 | 2 |
| $H_2$ feed | g/h | 10 | 10 | 11 | 9 |
| $C_3$ feed | kg/h | 47 | 51 | 51 | 47 |
| production rate | kg/h | 1.9 | 1.9 | 1.9 | 1.9 |
| split | wt-% | 2.3 | 2.3 | 2.3 | 2.3 |
| **LOOP REACTOR** | | | | | |
| temperature | °C | 95 | 95 | 95 | 95 |
| pressure | bar | 56 | 55 | 55 | 57 |
| cocatalyst feed | g/h | 4.5 | 3.7 | 4.3 | 5.1 |
| $C_2$ feed | kg/h | 37 | 37 | 38 | 38 |
| $H_2$ feed | g/h | 62 | 70 | 168 | 180 |
| $C_3$ feed | kg/h | 94 | 89 | 91 | 89 |
| $H_2/C_2$ ratio | mol/kmol | 270 | 245 | 638 | 759 |
| production rate | kg/h | 35 | 35 | 36 | 36 |
| split | wt-% | 42.5 | 42.7 | 43.3 | 43.3 |
| Loop $MFR_2$ | g/10min | 45 | 46 | 528 | 665 |
| **GAS PHASE REACTOR** | | | | | |
| temperature | °C | 85 | 85 | 85 | 85 |
| pressure | bar | 20 | 20 | 20 | 20 |
| $C_2$ feed | kg/h | 64 | 64 | 57 | 63 |
| $H_2$ feed | g/h | 38 | 118 | 12 | 87 |
| $C_4$ feed | kg/h | 0.9 | 2.1 | 1.1 | 1.4 |
| $H_2/C_2$ ratio | mol/kmol | 31 | 56 | 11 | 74 |
| $C_4/C_2$ ratio | mol/kmol | 23 | 42 | 29 | 34 |
| split | wt-% | 55.1 | 54.9 | 54.4 | 54.4 |
| Natural density | $kg/m^3$ | 949.0 | 949.1 | 948.7 | 952.0 |
| **EXTRUSION STEP** | | | | | |
| Feed | kg/h | 230 | 231 | 230 | 229 |
| screw speed | rpm | 400 | 400 | 400 | 451 |
| throttle valve opening | mm | 15.5 | 15.5 | 15.5 | 13.5 |
| SEI | kWh/t | 237 | 233 | 241 | 231 |
| melt temperature | °C | 264 | 262 | 266 | 268 |
| **FINAL PROPERTIES** | | **Ex. 1** | **CE 1** | **Ex. 2** | **CE 2** |
| Final $MFR_5$ | g/10min | 0.18 | 0.35 | 0.09 | 0.62 |
| Final $MFR_{21}$ | g/10min | 4.0 | 8.8 | 3.0 | 14.0 |
| $FRR_{21}/_5$ | | 22.2 | 25.1 | 33.3 | 22.6 |
| Compound density | $kg/m^3$ | 961.4 | 961.8 | 961.5 | 964.0 |

**Table 2**

| Comparative examples | $MFR_5$ (g/10 min.) | $MFR_{21}$ (g/10 min.) | Mn g/mol | Mw g/mol | $FRR_{21}/_5$ | Compound density $kg/m^3$ | STPR 12.4 MPa/20 °C (h) | PENT 2.8 MPa/80 °C (h) | Tensile modulus (MPa) | eta 747 kPa*s |
|---|---|---|---|---|---|---|---|---|---|---|
| CE 1 | 0.35 | 8.8 | 12700 | 204000 | 25.1 | 961.8 | 534 | 17.5 | 1164 | 243 |
| CE 2 | 0.62 | 14 | 7500 | 196000 | 22.6 | 964 | 1509 | 6.5 | 1245 | 132 |
| CE 3 | 0.46 | 13 | 11200 | 220500 | 28.3 | 960.6 | 204 | 93 | 1103 | 410 |
| CE 4 | 0.67 | 12 | 12400 | 193000 | 17.9 | 957.5 | 53 | 45 | 1025 | 116 |
| CE 5 | 0.31 | 8.8 | 13300 | 246700 | 28.4 | 957.7 | 41 | >3000 | 1006 | 390 |
| CE 6 | 0.32 | 8.1 | 9300 | 204000 | 25.3 | 959.8 | 132 | 713 | 1063 | 349 |
| CE 7 | 0.23 | 7.3 | 7500 | 228000 | 31.7 | 961.3 | 354 | 4177 | 1127 | 486 |
| CE 8 | 0.65 | 21 | 6400 | 164000 | 32.3 | 958.9 | 83 | >7984 | 1045 | 212 |
| CE 9 | 0.37 | 11 | 8100 | 197000 | 29.7 | 957.6 | 207 | 2928 | 1089 | 339 |
| CE 10 | 0.55 | 18 | 6900 | 193000 | 32.7 | 962.5 | 450 | 2068 | 1189 | 262 |
| CE 11 | 0.41 | 11 | 9300 | 203500 | 26.8 | 959.2 | 197 | 968 | 1108 | 252 |

**Table 2 (cont'd.)**

| Comparative examples | Intrinsic viscosity (ml/g) | Charpy notched impact 0 °C (kJ/m$^2$) | Charpy notched impact -20 °C (kJ/m$^2$) | RCP critical temp. (°C) |
|---|---|---|---|---|
| CE 1 | 290 | 16.3 | 13.4 | -23 |
| CE 2 | 266 | 9.7 | 4.7 | -4 |
| CE 3 | 298 | 14.2 | 7.1 | -8 |
| CE 4 | 267 | 16.8 | 10.7 | -6 |
| CE 5 | 309 | 23.1 | 13.9 | -12 |
| CE 6 | 311 | 17.2 | 11.4 | -8 |
| CE 7 | 323 | 16.2 | 9.8 | -8 |
| CE 8 | 268 | 12.2 | 5.8 | 2 |
| CE 9 | 292 | 14.5 | 6.7 | -4 |
| CE 10 | 283 | 8.34 | 4.9 | 5 |
| CE 11 | 295 | 14.3 | 6.7 | -5 |

**Table 3**

| | Ex. 1 | CE 1 | Ex. 2 | CE 2 |
|---|---|---|---|---|
| Composition $MFR_5$ [g/10 min] | 0.18 | 0.35 | 0.09 | 0.62 |
| Composition $MFR_{21}$ [g/10 min] | 4.0 | 8.8 | 3.0 | 14.0 |
| $FRR_{21/5}$ | 22.2 | 25.1 | 33.3 | 22.6 |
| Loop $MFR_2$ [g/10 min] | 45 | 46 | 528 | 665 |
| GPR split [wt%] | 55.1 | 54.9 | 54.4 | 54.4 |
| Natural density [kg/m$^3$] | 949.0 | 949.1 | 948.7 | 952.0 |
| Compound density [kg/m$^3$] | 961.4 | 961.8 | 961.5 | 964.0 |
| Butene content [mol%] (by melt state NMR) | 0.25 | 0.35 | 0.34 | 0.30 |
| Mn[g/mol] | 14700 | 12700 | 8240 | 7500 |

(continued)

| | Ex. 1 | CE 1 | Ex. 2 | CE 2 |
|---|---|---|---|---|
| Mw[g/mol] | 252000 | 204000 | 320000 | 196000 |

**Table 4**

| | Ex. 1 | CE 1 | Ex. 2 | CE 2 |
|---|---|---|---|---|
| Tensile modulus [MPa] | 1132 | 1164 | 1154 | 1245 |
| Pressure test (STPR) at 12.4 MPa/20 °C, [h] (ISO 1167-1:2006)* | 1676 | 534 | 5872 | 1509 |
| Log STPR | 3.2242 | 2.7275 | 3.7688 | 3.1787 |
| -4.5936 + 0.00624 * TM + 0.35 | 2.8201 | 3.0198 | 2.9574 | 3.5252 |
| PENT 2.8 MPa/80 °C [h]* | 60.5 | 17.5 | 2544 | 6.5 |
| Charpy notched impact 0 °C [kJ/m$^2$] | 27 | 16.3 | 34 | 9.7 |
| Charpy notched impact -20 °C [kJ/m$^2$] | 24.4 | 13.4 | 22.3 | 4.7 |
| RCP critical temp. [°C] | -30 | -23 | -25 | -4 |
| Viscosity at $eta_{747}$ [kPa*s] | 566 | 243 | 1401 | 132 |
| Intrinsic viscosity [ml/g] | 349 | 290 | 350 | 266 |
| * Two tests were performed and the average value is recorded | | | | |

**Table 5**

| | Ex. 1 | Ex. 2 | CE 1 | CE 2 | CE 3 | CE 4 | CE 5 | CE 6 | CE 7 | CE 8 | CE 9 | CE 10 | CE 11 |
|---|---|---|---|---|---|---|---|---|---|---|---|---|---|
| | | | | | | | | | | | | | |
| Tensile modulus, MPa | 1132 | 1154 | 1164 | 1245 | 1103 | 1025 | 1006 | 1063 | 1127 | 1045 | 1089 | 1189 | 1108 |
| STPR (12.4 MPa/20°C), hours | 1676 | 5872 | 534 | 1509 | 204 | 53 | 41 | 132 | 354 | 83 | 207 | 450 | 197 |
| Log(STPR) | 3.2242 | 3.7688 | 2.7275 | 3.1787 | 2.3096 | 1.7243 | 1.6128 | 2.1206 | 2.5490 | 1.9191 | 2.3160 | 2.6532 | 2.2945 |
| -4.5936 + 0.00624*TM + 0.35 | 2.8201 | 2.9574 | 3.0198 | 3.5252 | 2.6391 | 2.1524 | 2.0338 | 2.3895 | 2.7889 | 2.2772 | 2.5518 | 3.1758 | 2.6703 |
| | | | | | | | | | | | | | |
| log (STPR) + 4.5936 - 0.00624*TM | 0.7541 | 1.1614 | 0.0577 | 0.0035 | 0.0205 | -0.0781 | -0.0710 | 0.0811 | 0.1101 | -0.0081 | 0.1142 | -0.1726 | -0.0258 |
| | | | | | | | | | | | | | |

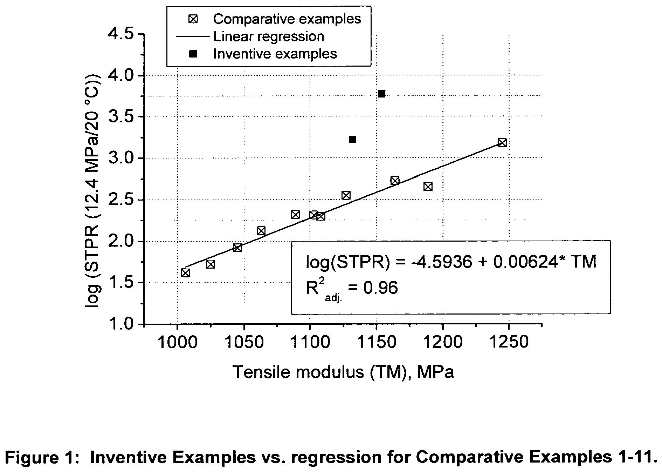

It is apparent from the above results that the inventive bimodal polyethylene compositions in which the composition had a $MFR_5$ of not more than 0.18 g/10 min. and a $MFR_{21}$ of not more than 5.0 g/10 min and thus a substantially lower final molecular weight compared with the comparative compositions, showed a marked improvement in pressure resistance at 20 °C measured at 12.4 MPa stress level without increasing the density of the composition as done in the prior art. It is further apparent from these results that control of the $MFR_5$ and the $MFR_{21}$ within the ranges of the invention also achieves a relationship between short term pressure resistance and tensile modulus which fulfils the inequation of claim 1 (Table 4 above). The compositions according to Comparative Examples 3 to 11 do not fulfil the ranges for $MFR_5$ and the $MFR_{21}$ according to the present invention. Thus, they result in a relationship between short term pressure resistance and tensile modulus following substantially the regression line shown in Fig. 1. It can be appreciated from Fig. 1 that the inventive compositions unexpectedly lie far above the regression line which means that they have a substantially increased short term pressure resistance (12.4 MPa/80 °C) at comparable tensile modulus. Simultaneously, a high tensile modulus could be maintained at the same desirable level as in the comparative compositions and improved impact properties (Charpy impact strength and PENT impact strength) could be achieved. Furthermore the rapid crack propagation resistance was superior to the comparative compositions.

## Claims

1. A polyethylene composition comprising a base resin which comprises

   (A) a first ethylene homo- or copolymer fraction, and
   (B) a second ethylene homo- or copolymer fraction,

   fraction (A) having a lower molecular weight than fraction (B),
   wherein the polyethylene composition has a $MFR_5$ of not more than 0.2 g/10 min, determined according to ISO 1133 at 190 °C and at a load of 5.0 kg;
   a $MFR_{21}$ of not more than 5.0 g/10 min, determined according to ISO 1133 at 190 °C and at a load of 21.6 kg, and the relationship between pressure resistance (STPR) according to ISO 1167-1:2006, measured at 12.4 MPa and 20 °C in hours and tensile modulus (TM), measured according to ISO 527-2:1993 in MPa fulfils the following inequation:

   $$\log (STPR) [h] > (-4.5936 + 0.00624 * TM [MPa]) + 0.35,$$

   wherein the polyethylene composition has a short term pressure resistance Form (STPR) measured according to ISO 1167-1:2006 at 20 °C and 12.4 MPa of at least 1000 h.

2. The polyethylene composition according to claim 1, wherein the base resin has a comonomer content of not more than 1 mol%, based on the total weight of the polyethylene composition, measured by quantitative nuclear-magnetic resonance (NMR) spectroscopy.

3. The polyethylene composition according to claim 1 or 2, which is a multimodal polyethylene composition.

4. The polyethylene composition according to any one of the preceding claims, wherein fraction (A) is an ethylene homopolymer.

5. The polyethylene composition according to any of the preceding claims wherein fraction (B) is a copolymer of ethylene with at least one further alpha-olefin comonomer.

6. The polyethylene composition according to any of the preceding claims wherein the polyethylene composition has a density of not less than 943 $kg/m^3$.

7. A polyethylene composition according to any of the preceding claims wherein the base resin has been produced in a multistage process.

8. A process for the production of a polyethylene composition according to any of the preceding claims comprising the steps of:

i) polymerising in a first polymerization step ethylene monomers, and optionally one or more alpha-olefin comonomers, in the presence of a polymerisation catalyst to obtain a first ethylene homo- or copolymer fraction (A)
ii) polymerising in a second polymerization step ethylene monomers, and optionally one or more alpha-olefin comonomers, in the presence of a polymerisation catalyst to obtain a second ethylene homo- or copolymer fraction (B) having a higher average molecular weight than fraction (A),

wherein the first polymerisation step (i) and the second polymerisation step (ii) are conducted in any order.

**9.** The process according to claim 8, wherein the polymerisation to obtain fraction (A) is carried out in a slurry reactor.

**10.** The process according to claim 8 or 9, wherein the polymerisation to obtain fraction (B) is carried out in a gas phase reactor.

**11.** The process according to any one of claims 8 to 10, wherein the polymerization catalyst is a Ziegler-Natta catalyst.

**12.** An article comprising a polyethylene composition according to any one of claims 1 to 7.

**13.** An article according to claim 12 which is a pipe or a fitting.

**14.** Use of a polyethylene composition according to any one of claims 1 to 7 for the production of a pipe or a fitting.

**15.** Use of a polyethylene composition according to any one of claims 1 to 7 for increasing the lifetime of a pipe or a fitting.

## Patentansprüche

**1.** Polyethylenzusammensetzung, umfassend ein Basisharz, umfassend das Folgende:

(A) eine erste Ethylenhomo- oder -copolymerfraktion, und
(B) eine zweite Ethylenhomo- oder -copolymerfraktion,

wobei die Fraktion (A) ein niedrigeres Molekulargewicht als die Fraktion (B) aufweist,
wobei die Polyethylenzusammensetzung einen $MFR_5$ von nicht mehr als 0,2 g/10 min aufweist, bestimmt gemäß ISO 1133 bei 190 °C und einer Last von 5,0 kg;
einen $MFR_{21}$ von nicht mehr als 5,0 g/10 min aufweist, bestimmt gemäß ISO 1133 bei 190 °C und einer Last von 21,6 kg, und
die Beziehung zwischen Druckfestigkeit (STPR, für Englisch, pressure resistance') gemäß ISO 1167-1:2006, gemessen bei 12,4 MPa und 20 °C in Stunden, und Zugmodul (TM, für Englisch ‚tensile modulus'), gemessen gemäß ISO 527-2:1993 in MPa, die folgende Ungleichung erfüllt:

$$\log (STPR) [h] > (-4{,}5936 + 0{,}00624 * TM [MPa]) + 0{,}35,$$

wobei die Polyethylenzusammensetzung eine Kurzzeitdruckfestigkeit (STPR, für Englisch ‚short term pressure resistance') von mindestens 1000 h aufweist, gemessen gemäß ISO 1167-1:2006 bei 20 °C und 12,4 MPa.

**2.** Polyethylenzusammensetzung nach Anspruch 1, wobei das Basisharz einen Comonomergehalt von nicht mehr als 1 Mol-% aufweist, basierend auf dem Gesamtgewicht der Polyethylenzusammensetzung, gemessen durch quantitative Kernspinresonanzspektroskopie (NMR).

**3.** Polyethylenzusammensetzung nach Anspruch 1 oder 2, die eine multimodale Polyethylenzusammensetzung ist.

**4.** Polyethylenzusammensetzung nach einem der vorhergehenden Ansprüche, wobei die Fraktion (A) ein Ethylenhomopolymer ist.

**5.** Polyethylenzusammensetzung nach einem der vorhergehenden Ansprüche, wobei die Fraktion (B) ein Copolymer von Ethylen mit mindestens einem weiteren alpha-Olefincomonomer ist.

6. Polyethylenzusammensetzung nach einem der vorhergehenden Ansprüche, wobei die Polyethylenzusammensetzung eine Dichte von nicht weniger als 943 $kg/m^3$ aufweist.

7. Polyethylenzusammensetzung nach einem der vorhergehenden Ansprüche, wobei das Basisharz in einem mehrstufigen Verfahren hergestellt worden ist.

8. Verfahren für die Herstellung von einer Polyethylenzusammensetzung nach einem der vorhergehenden Ansprüche, umfassend die folgenden Schritte:

   i) Polymerisieren in einem ersten Polymerisationsschritt von Ethylenmonomeren, und optional ein oder mehreren alpha-Olefincomonomeren, in Gegenwart von einem Polymerisationskatalysator, um eine erste Ethylenhomo- oder -copolymerfraktion (A) zu erhalten,
   ii) Polymerisieren in einem zweiten Polymerisationsschritt von Ethylenmonomeren, und optional ein oder mehreren alpha-Olefincomonomeren, in Gegenwart von einem Polymerisationskatalysator, um eine zweite Ethylenhomo- oder -copolymerfraktion (B) zu erhalten, die ein höheres durchschnittliches Molekulargewicht als die Fraktion (A) aufweist,

   wobei der erste Polymerisationsschritt (i) und der zweite Polymerisations-schritt (ii) in irgendeiner Reihenfolge durchgeführt werden.

9. Verfahren nach Anspruch 8, wobei die Polymerisation, um die Fraktion (A) zu erhalten, in einem Slurry-Reaktor durchgeführt wird.

10. Verfahren nach Anspruch 8 oder 9, wobei die Polymerisation, um die Fraktion (B) zu erhalten, in einem Gasphasenreaktor durchgeführt wird.

11. Verfahren nach einem der Ansprüche 8 bis 10, wobei der Polymerisationskatalysator ein Ziegler-Natta-Katalysator ist.

12. Artikel, umfassend eine Polyethylenzusammensetzung nach einem der Ansprüche 1 bis 7.

13. Artikel nach Anspruch 12, der ein Rohr oder ein Anschlussstück ist.

14. Verwendung von einer Polyethylenzusammensetzung nach einem der Ansprüche 1 bis 7 zur Herstellung von einem Rohr oder einem Anschlussstück.

15. Verwendung von einer Polyethylenzusammensetzung nach einem der Ansprüche 1 bis 7 zur Erhöhung der Lebensdauer von einem Rohr oder einem Anschlussstück.

**Revendications**

1. Composition de polyéthylène comprenant une résine de base qui comprend

   (A) une première fraction d'homo- ou de co-polymère d'éthylène, et
   (B) une deuxième fraction d'homo- ou de co-polymère d'éthylène,

   la fraction (A) ayant une masse moléculaire inférieure à celle de la fraction (B),
   laquelle composition de polyéthylène a un $MFR_5$ ne dépassant pas 0,2 g/10 min, déterminé conformément à la norme ISO 1133 à 190°C et sous une charge de 5,0 kg ;
   un $MFR_{21}$ ne dépassant pas 5,0 g/10 min, déterminé conformément à la norme ISO 1133 à 190°C et sous une charge de 21,6 kg, et
   dans laquelle la relation entre la résistance à la pression (STPR) conformément à la norme ISO 1167-1:2006, mesurée sous 12,4 MPa et à 20°C, en heures, et le module de traction (TM), mesuré conformément à la norme ISO 527-2:1993, en MPa, satisfait à l'inégalité suivante :

$$\log (STPR) [h] > (-4,5936 + 0,00624 * TM [MPa]) + 0,35,$$

laquelle composition de polyéthylène a une résistance à la pression à court terme (STPR), mesurée conformément à la norme ISO 1167-1:2006 à 20°C et sous 12,4 MPa, d'au moins 1000 h.

**2.** Composition de polyéthylène selon la revendication 1, dans laquelle la résine de base a une teneur en comonomères ne dépassant pas 1 % en moles, par rapport au poids total de la composition de polyéthylène, mesurée par spectroscopie par résonance magnétique nucléaire (RMN) quantitative.

**3.** Composition de polyéthylène selon la revendication 1 ou 2, qui est une composition de polyéthylène multimodale.

**4.** Composition de polyéthylène selon l'une quelconque des revendications précédentes, dans laquelle la fraction (A) est un homopolymère d'éthylène.

**5.** Composition de polyéthylène selon l'une quelconque des revendications précédentes, dans laquelle la fraction (B) est un copolymère d'éthylène avec au moins un autre comonomère d'alpha-oléfine.

**6.** Composition de polyéthylène selon l'une quelconque des revendications précédentes, laquelle composition de polyéthylène a une masse volumique non inférieure à 943 kg/$m^3$.

**7.** Composition de polyéthylène selon l'une quelconque des revendications précédentes, dans laquelle la résine de base a été produite dans un procédé à étages multiples.

**8.** Procédé pour la production d'une composition de polyéthylène selon l'une quelconque des revendications précédentes, comprenant les étapes suivantes :

i) polymérisation, dans une première étape de polymérisation, de monomères d'éthylène et éventuellement d'un ou plusieurs comonomères d'alpha-oléfine, en présence d'un catalyseur de polymérisation, pour que soit obtenue une première fraction d'homo-ou de co-polymère d'éthylène (A),
ii) polymérisation, dans une deuxième étape de polymérisation, de monomères d'éthylène et éventuellement d'un ou plusieurs comonomères d'alpha-oléfine, en présence d'un catalyseur de polymérisation, pour que soit obtenue une deuxième fraction d'homo-ou de co-polymère d'éthylène (B) ayant une masse moléculaire supérieure à celle de la fraction (A),

dans lequel la première étape de polymérisation (i) et la deuxième étape de polymérisation (ii) sont effectuées dans n'importe quel ordre.

**9.** Procédé selon la revendication 8, dans lequel la polymérisation pour que soit obtenue la fraction (A) est mise en oeuvre dans un réacteur en suspension.

**10.** Procédé selon la revendication 8 ou 9, dans lequel la polymérisation pour que soit obtenue la fraction (B) est mise en oeuvre dans un réacteur en phase gazeuse.

**11.** Procédé selon l'une quelconque des revendications 8 à 10, dans lequel le catalyseur de polymérisation est un catalyseur de Ziegler-Natta.

**12.** Article comprenant une composition de polyéthylène selon l'une quelconque des revendications 1 à 7.

**13.** Article selon la revendication 12, qui est un tuyau ou un raccord.

**14.** Utilisation d'une composition de polyéthylène selon l'une quelconque des revendications 1 à 7 pour la production d'un tuyau ou d'un raccord.

**15.** Utilisation d'une composition de polyéthylène selon l'une quelconque des revendications 1 à 7 pour augmenter la durée de vie d'un tuyau ou d'un raccord.

Comparative examples
Linear regression
Inventive examples
log (STPR (12.4 MPa/20 °C))
4.5
4.0
3.5
3.0
2.5
2.0
1.5
1.0
1000
1050
1100
1150
1200
1250
Tensile modulus (TM), MPa
log(STPR) = -4.5936 + 0.00624* TM
$R^2_{adj.}$ = 0.96

**Figure 1: Inventive Examples vs. regression for Comparative Examples 1-11.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0022040 A
- WO 0102480 A1
- EP 1460105 A1
- US 4582816 A
- US 3405109 A
- US 3324093 A
- EP 479186 A
- US 5391654 A
- WO 2004055068 A
- WO 2004055069 A
- EP 0810235 A
- US 5026795 A
- US 4803251 A
- US 4532311 A
- US 4855370 A
- EP 560035 A


### Non-patent literature cited in the description


- **SCHEIRS et al.** Scheirs, Bohm, Boot and Leevers: PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201